# EUROPEAN PATENT APPLICATION

(11) **EP 4 799 796 A2**
(43) Date of publication of application: **02.09.2026**
(21) Application number: 26184308.0
(22) Date of filing: 10.06.2026
(51) Int. Cl.: B29C 64/124, B29C 64/232, B29C 64/245, B29C 64/255, B29C 64/259, B29C 64/364, B33Y 10/00, B33Y 30/00, B33Y 40/00

(54) **LIMITING MECHANISM AND PRINTING SYSTEM**

(30) Priority: 31.07.2025 CN 202511073917; 30.09.2025 CN 202511433214; 31.12.2025 CN 202512061715
(71) Applicant: Shining 3D Tech Co., Ltd., Hangzhou, Zhejiang 311258 (CN)
(72) Inventor: ZHAO, Xiaobo, Hangzhou, Zhejiang 311258 (CN); TAALAB, Elias, Hangzhou, Zhejiang 311258 (CN); CHEN, Da, Hangzhou, Zhejiang 311258 (CN); HE, Junlin, Hangzhou, Zhejiang 311258 (CN)
(74) Representative: Dai, Simin

(57) **Abstract**

Provided are a limiting mechanism and a printing system. The limiting mechanism includes a limiting portion (330) and a drive unit. The limiting portion (330) includes a cantilever, and the drive unit is connected to the limiting portion (330) and is capable of driving the limiting portion (330) to move. The printing system includes a system main body, a container assembly (100) and a limiting mechanism.

## Description

### TECHNICAL FIELD

The present application relates to the field of 3D printing technology, and in particular to a limiting mechanism and a printing system.

### BACKGROUND

Most existing stereolithography 3D printing devices utilise a motor-driven lead screw to cause the printing platform to move along the Z-axis direction, thereby enabling layer-by-layer 3D printing. This approach presents challenges when printing with high-viscosity resin materials. Furthermore, it is difficult to limit a position of container assembly accurately during the printing process to ensure printing precision.

### SUMMARY

A first aspect of the present application provides a limiting mechanism including a limiting portion and a drive unit, wherein the limiting portion includes a cantilever, and the drive unit is connected with the limiting portion and is capable of driving the limiting portion to move.

Optionally, a gas injecting mechanism is provided within the cantilever, wherein the cantilever is capable of abutting against the container assembly under driving of the drive unit, and the gas injecting mechanism is in communication with a vent of the container assembly.

Optionally, the gas injecting mechanism includes a gas outlet connector, an outlet of the gas outlet connector forms a gas outlet; the gas outlet connector is fitted with an elastic sealing sleeve on its outer surface, and when the cantilever abuts against the container assembly, the elastic sealing sleeve is sealingly inserted into the vent.

Optionally, the elastic sealing sleeve includes a sleeve body, a circumferential outer wall of the sleeve body is provided with a sealing lip projecting outwards; when the cantilever abuts against the container assembly, the sealing lip abuts against the vent.

Optionally, the sealing lip includes at least two sealing lips along a first direction.

Optionally, along the first direction, of two adjacent sealing lips in the at least two sealing lips, an outer diameter of the sealing lip closer to an interior of the container assembly is smaller than an outer diameter of the sealing lip further from the interior of the container assembly.

Optionally, a first positioning structure is provided on a surface of the limiting portion on which the gas outlet is provided; a second positioning structure is correspondingly provided on the container assembly; when the cantilever abuts against the container assembly, the first positioning structure engages with the second positioning structure to position the limiting portion relative to the container assembly in the first direction and in a first plane, wherein the first plane is perpendicular to the first direction.

Optionally, the first positioning structure includes a protrusion provided on a bottom surface of the limiting portion, and the second positioning structure includes a recess provided on the container assembly; when the cantilever abuts against the container assembly, the protrusion is inserted into the recess.

Optionally, the limiting mechanism further includes a locking device, wherein the locking device is mounted on the cantilever, and the locking device is configured to lock and secure the container assembly to the cantilever.

Optionally, the locking device includes a base; a drive assembly, the drive assembly being mounted on the base; a snap latching assembly, the snap latching assembly being rotatably connected to an outer surface of the base; the snap latching assembly is driven to rotate by the drive assembly, so that the snap latching assembly opens or closes during rotation, thereby locking or unlocking the container assembly.

Optionally, the locking device further includes a rotation portion, wherein the rotating portion is rotatably mounted on the base, the rotating portion is drivingly connected with the drive assembly, and an outer contour of the rotating portion is in contact with an end of the snap latching assembly; the outer contour of the rotating portion includes two oppositely arranged first contour sections and two oppositely arranged second contour sections, the first contour sections and the second contour sections are connected, and the first contour sections or the second contour sections are arranged to protrude in a radial direction of the rotating portion; shapes of the first contour sections and the second contour sections match opening and closing movement trajectory of the snap latching assembly, and the rotational movement of the rotating portion causes the snap latching assembly to open or close.

Optionally, the locking device is configured to engage with a positioning portion of the cantilever, the positioning portion being axially engaged with the container assembly, and the snap latching assembly, when closed, is engaged with the container assembly, thereby securing the container assembly.

Optionally, the base is provided with a clearance region; when the locking device is mounted on the positioning portion, the clearance region is configured to allow a vent hole on the positioning portion to communicate with the gas injecting mechanism on the cantilever.

Optionally, the snap latching assembly includes at least two latch hooks, wherein the at least two latch hooks are uniformly distributed along a circumference of the outer surface of the base, and each of the latch hooks has a force-receiving end and a locking end; when the force-receiving end is in contact with one of the first contour sections, the locking end is in a locked state; when the force-receiving end is in contact with one of the second contour sections, the locking end is in an unlocked state.

Optionally, an end of the container assembly includes a radially extending projection; when the locking device is in the locked state, locking ends of the snap latching assembly engage with the projection of the container assembly to lock the container assembly.

Optionally, the limiting mechanism further includes an elastic member, wherein the elastic member is configured to provide an elastic force in an inward direction on the force-receiving ends.

Optionally, the drive assembly includes a second drive unit and a transmission assembly; one end of the transmission assembly is connected to the drive unit, and other end of the transmission assembly is connected to the rotating unit; the transmission assembly includes a first transmission member and a second transmission member, the first transmission member and the second transmission member are rotatably connected to the second drive unit, wherein the second drive unit drives the first transmission member to rotate, thereby bringing the second transmission member to rotate.

Optionally, the rotating portion further includes a through-hole, a wall of the through-hole is provided with a circumferential third transmission member; the third transmission member is in driving connection with the second transmission member.

Optionally, the gas injecting mechanism is provided within the cantilever, an end of the cantilever is provided with a positioning portion, and the positioning portion is provided with a vent hole communicating with the gas injecting mechanism; when the locking device locks and secures the container assembly to the cantilever, the vent hole in the positioning portion docks with the vent of the container assembly.

A second aspect of the present application provides a printing system including a system main body, a container assembly and a limiting mechanism, wherein the limiting mechanism includes a limiting portion and a drive unit, wherein the limiting portion includes a cantilever, and the drive unit is connected with the limiting portion and is capable of driving the limiting portion to move.

### BRIEF DESCRIPTION OF DRAWINGS

In order to illustrate more clearly the specific embodiments of the present application or the technical solutions in the prior art, a brief introduction is provided below to the drawings required for the description of the specific embodiments or the prior art. It is evident that the drawings described below represent some embodiments of the present application; however, a person skilled in the art may derive other drawings from these without requiring an inventive step.
FIG. 1 is a side view of a printing system according to embodiments of the present application;
FIG. 2 is a schematic diagram of the printing system according to embodiments of the present application after printing;
FIG. 3 is a sectional view of the printing system according to embodiments of the present application prior to printing;
FIG. 4 is an enlarged view of an area marked M in FIG. 3;
FIG. 5 is a sectional view of the printing system according to embodiments of the present application after printing;
FIG. 6 is a sectional view along line A-A in FIG. 1;
FIG. 7 is a schematic diagram of the positioning assembly of the printing system according to embodiments of the present application prior to clamping;
FIG. 8 is a schematic diagram of the positioning assembly of the printing system according to embodiments of the present application after clamping;
FIG. 9 is a schematic diagram of a mounting platform of the positioning assembly of the printing system according to embodiments of the present application;
FIG. 10 is a structural schematic diagram of the locking device in open state according to embodiments of the present application;
FIG. 11 is a structural schematic diagram of the locking device in closed state according to embodiments of the present application;
FIG. 12 is an exploded schematic diagram of the locking device according to embodiments of the present application;
FIG. 13 is a schematic cross-sectional view of the locking device according to embodiments of the present application;
FIG. 14 is an exploded schematic diagram of the printing device according to embodiments of the present application;
FIG. 15 is a schematic cross-sectional view of the printing device according to embodiments of the present application;
FIG. 16 is a structural schematic diagram of a part of the printing device according to embodiments of the present application.

Reference numerals: 100 - container assembly; 110 - outer cylinder; 1255 - second positioning structure;
200 - positioning assembly; 210 - mounting platform; 211 - positioning recess; 212 - support platform; 213 - light-transmitting support member; 220 - clamping assembly;
300 - gas injecting mechanism; 310 - gas outlet connector; 320 - elastic sealing sleeve; 321 - sealing lip; 330 - limiting portion; 331 - first positioning structure;
400 - limiting mechanism; 410 - lead screw; 420 - slider; 430 - slide rail; 440 -guide slot;
10 - locking device;
20 - base; 21 - through hole; 22 - third mounting slot;
30 - drive assembly; 31 - second drive unit; 32 - transmission assembly; 3211 - first transmission member; 3221 - second transmission member;
40 - rotating portion; 41-outer contour; 411-first contour section; 412-second contour section; 42-through hole; 421-third transmission member; 43-bearing; 44-stepped section;
50-snap latching assembly; 51-latch hook; 511-force-receiving end; 512-locking end; 513-first mounting slot; 514-second mounting slot; 52- pivot shaft; 53-elastic member;
600-adapter;
700-printing device; 710-cantilever; 711-positioning portion; 712- vent hole; 730-platform assembly; 731-projection; 740-buffer member;
800-printing system.

### DETAILED DESCRIPTION

To make the objectives, technical solutions and advantages of the embodiments of the present application clearer, the technical solutions of the embodiments of the present application will be described clearly and completely below with reference to the accompanying drawings. It is evident that the embodiments described constitute only some, and not all, of the embodiments of the present application. Typically, the components of the embodiments of the present application described and illustrated in the accompanying drawings may be arranged and designed in various different configurations.

Consequently, the detailed description of the embodiments of the present application provided in the accompanying drawings is not intended to limit the scope of the present application as claimed, but merely illustrates selected embodiments of the present application. All other embodiments obtained by a person skilled in the art based on the embodiments of the present application without the need for inventive labour fall within the scope of protection of the present application.

It should be noted that similar reference numerals and letters in the accompanying drawings denote similar elements; therefore, once an element has been defined in one drawing, it need not be further defined or explained in subsequent drawings.

In the description of the present application, it should be noted that terms such as "centre", "upper", "lower", "left", "right", "vertical", "horizontal", "inner", "outer" and the like indicate orientation or positional relationships based on the orientation or positional relationships shown in the drawings, or the orientation or positional relationships in which the product of the present application is customarily placed when in use. These terms are used solely for the convenience of describing the present application and to simplify the description, and are not intended to indicate or imply that the devices or elements referred to must have a specific orientation, be constructed in a specific orientation, or operate in a specific orientation; therefore, they must not be construed as limiting the scope of the present application. Furthermore, terms such as "first", "second" and "third" are used solely for the purpose of distinguishing between elements in the description and should not be construed as indicating or implying relative importance.

Moreover, terms such as "horizontal" and "vertical" do not require components to be absolutely horizontal or vertical, but may be slightly inclined. For example, "horizontal" merely refers to a direction that is more horizontal relative to "vertical"; it does not mean that the structure must be completely horizontal, but may be slightly inclined.

It should also be noted in the description of the present application that, unless otherwise explicitly stipulated or limited, the terms "arranged", "mounted", "connected" and "coupled" should be interpreted broadly. For example, they may refer to a fixed connection, a detachable connection or an integral connection; they may refer to a mechanical connection or an electrical connection; they may refer to a direct connection or an indirect connection via an intermediate medium; or they may refer to internal communication between two components. A person skilled in the art will be able to understand the specific meaning of the above terms in the context of the present application based on the specific circumstances.

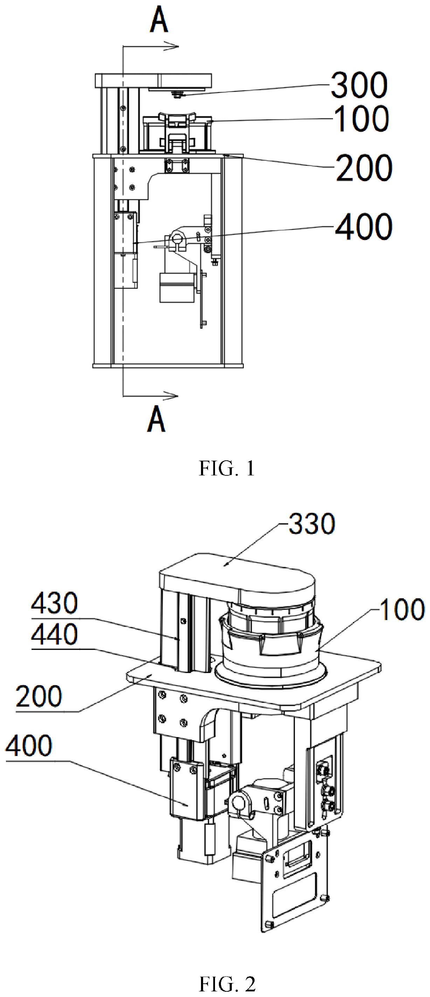

As shown in FIG. 1, a printing system provided in the present application includes a container assembly 100, a positioning assembly 200, a gas injecting mechanism 300 and a limiting mechanism 400.

As shown in FIGs. 2 to 4, a gas outlet of the gas injecting mechanism 300 is connected to a vent of the container assembly; and the limiting mechanism 400 includes a limiting portion 330 capable of moving in a first direction, which is configured to limit a travel distance of a platform assembly 730 in the first direction.

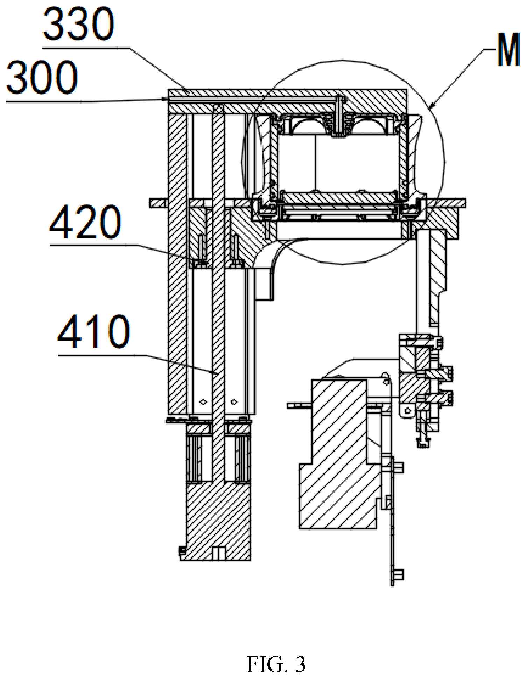

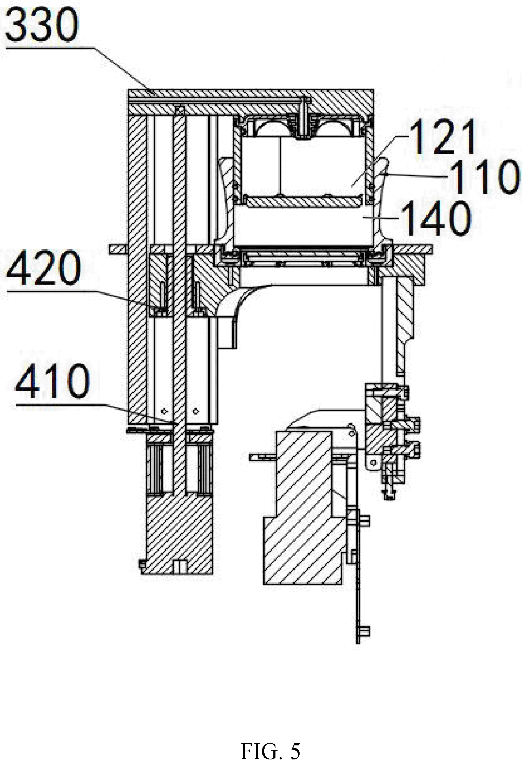

As shown in FIGs. 3 to 5, prior to printing, the gas injecting mechanism 300 is connected with the container assembly 100 to inject gas into the container assembly 100. During the printing process, to control the travel distance of the platform assembly 730, the limiting portion 330 of the limiting mechanism 400 is connected with the platform assembly 730. It is to be noted that the limiting portion 330 may be directly connected with the platform assembly 730; alternatively, an abutting relationship may be formed between the limiting portion 330 and the platform assembly 730, whereby during the ascent of the platform assembly 730, the limiting portion 330 acts as a stopper. When the platform assembly 730 comes into contact with the limiting portion 330, the platform assembly 730 is prevented from continuing to rise. Only after the limiting portion 330 has moved a distance L in the first direction will the platform assembly 730 move upwards a distance L under the pressure of gas. In this embodiment, the limiting portion 330 may be configured to rise at a fixed speed; correspondingly, under the limiting of the limiting portion 330, the platform assembly 730 will move vertically upwards at approximately the same speed. The limiting portion 330 moves layer by layer, and the platform assembly 730 moves layer by layer, thereby achieving layer-by-layer printing to form a printed object, and avoiding printing failure caused by the platform assembly 730 being unable to move a required distance due to excessive or insufficient gas pressure.

The gas injecting mechanism 300 is connected with the limiting portion 330; the limiting portion 330 brings the gas injecting mechanism 300 to move towards or away from the vent, so as to couple or uncouple the vent and the gas outlet.

In other implementable embodiments, the gas injecting mechanism 300 and the limiting portion 330 may be two independent components.

As shown in FIGs. 2 to 4, in this embodiment, to simplify structure and enhance degree of integration and automation, the gas injecting mechanism 300 and the limiting portion 330 are integrated onto a single component. The limiting portion 330 includes a cantilever that is capable of vertical movement. The gas injecting mechanism 300 is mounted on the cantilever, and the gas outlet of the gas injecting mechanism 300 is fixedly connected to the cantilever. Prior to printing, the cantilever moves to a position above a mounting location of the container assembly 100. The container assembly 100 is fitted in place, and the cantilever is then lowered so that the gas outlet of the gas injecting mechanism 300 docks with the vent. Simultaneously, the cantilever presses against the top surface of the platform assembly 730, exerting a limiting effect. During the printing process, as the cantilever rises, the platform assembly 730 also moves upwards under gas pressure; and the gas outlet of the gas injecting mechanism 300 remains docked with the vent at all times. The raised position of the cantilever limits the elevated position of the platform assembly 730. The cantilever's layer-by-layer ascent provides layer-by-layer limiting for the platform assembly 730, thereby enabling the 3D printer to print layer by layer.

By way of example, a gas outlet connector 310 may be fixedly mounted on the cantilever or may be movably connected to the cantilever. When the gas outlet connector 310 is fixedly mounted on the cantilever, the gas outlet connector 310 docks and communicates with the vent when the cantilever abuts the platform assembly.

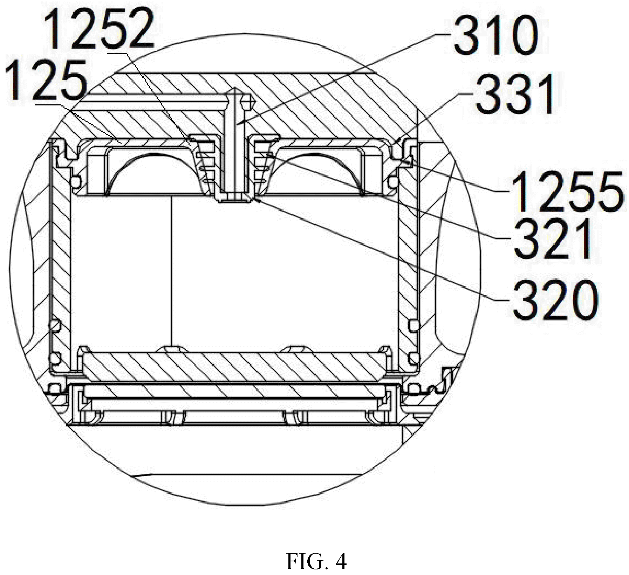

As shown in FIG. 4, the gas injecting mechanism 300 includes the gas outlet connector 310, an outlet of which forms the gas outlet. An elastic sealing sleeve 320 is fitted over the outer surface of the gas outlet connector 310, and the elastic sealing sleeve 320 is configured to form a sealed mating connection with the vent.

The gas outlet connector 310 is inserted into the vent. The elastic sealing sleeve 320 on the outer surface of the gas outlet connector 310 can undergo compressed deformation against an inner wall of a first skirt 1252, filling a gap between them, thereby enhancing sealing and preventing gas leakage.

As shown in FIG. 4, the elastic sealing sleeve 320 includes a sleeve body, on the circumferential outer wall of which sealing lips 321 projecting outwards are provided. Along the first direction, a number of sealing lips 321 may be one, two or more. The spaced-apart sealing lips 321 provide greater space for deformation, allowing the sealing lips 321 to undergo greater deformation under compression, thereby better filling the gap between the sleeve body and the first skirt 1252, and facilitating assembly.

Along the first direction, in any two adjacent sealing lips 321, an outer diameter of a sealing lip 321 closer to an interior of a receiving cavity 121 is smaller than that of a sealing lip 321 further from the interior of the receiving cavity 121.

From top to bottom, the first skirt 1252 has a tapered cylindrical structure. To match the tapered shape of the first skirt 1252, the outer contour of the elastic sealing sleeve 320 is designed to match the shape of the first skirt 1252, facilitating the insertion of the elastic sealing sleeve 320 into the first skirt 1252; simultaneously, this ensures a larger contact area between the two, resulting in better sealing performance and easier assembly.

A first positioning structure 331 is provided on the surface of the limiting portion 330 on which the gas outlet is provided; a second positioning structure 1255 is provided on a cover 125 of the platform assembly 730. The first positioning structure 331 and the second positioning structure 1255 mate to position the limiting portion 330 and the platform assembly 120 in the first direction and within a first plane, where the first plane is perpendicular to the first direction.

The first positioning structure 331 includes a protrusion provided on the bottom surface of the limiting portion 330, whilst the second positioning structure 1255 includes a recess in the cover 125. After the limiting portion 330 is lowered and the gas outlet connector 310 is inserted into the vent, the first positioning structure 331 is inserted into and engages with the second positioning structure 1255 to achieve positioning. Once positioned, the axial direction of the container assembly 100 is perpendicular to the bottom surface of the limiting portion 330, thereby ensuring that the axial direction of the container assembly 100 is oriented vertically. Furthermore, once the first positioning structure 331 is inserted into and docked with the second positioning structure 1255, the container assembly 100, held in place by the first positioning structure 331, is prevented from moving in the circumferential direction. This ensures greater stability of the container assembly 100 during the printing process, preventing any wobbling. Alternatively, the first positioning structure 331 may include a recess in the bottom surface of the limiting portion 330, whilst the second positioning structure 1255 may include a protrusion provided on the cover 125.

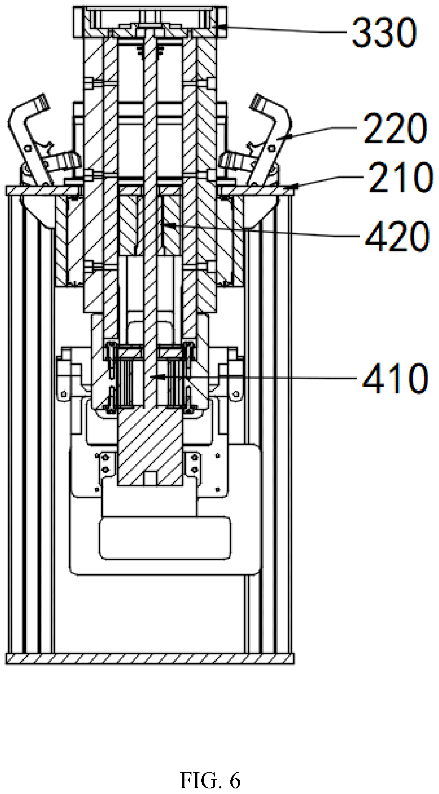

As shown in FIGs. 3 to 6, the printing device further includes a frame; and the limiting mechanism 400 includes a drive unit. The limiting portion 330 is connected to the drive unit, and the drive unit is configured to drive the limiting portion 330 to move in the first direction. The drive unit includes a lead screw 410, a motor and a slider 420. The motor is connected with the lead screw 410 to drive the lead screw 410 to rotate. The slider 420 is threadedly connected with the lead screw 410 and fixedly connected with the frame. The motor and the limiting portion 330 move relative to the frame only in the first direction, such that when the motor is activated, both the motor and the lead screw 410 move relative to the slider 420 along the first direction.

The lower end of the lead screw 410 is connected to the motor, whilst the upper end of the lead screw 410 is rotatably connected to the limiting portion 330. The lead screw 410 is rotatable relative to the limiting portion 330, but the limiting portion 330 is restricted from rotating relative to the frame. Consequently, during the printing process, the frame remains stationary, and the slider 420 is fixedly connected to the frame. Upon activation of the motor, the lead screw 410 rotates. As the slider 420 remains stationary and the motor is constrained by the frame to move only in the first direction without rotating, the lead screw 410, the motor and the limiting portion 330 move together in the first direction.

As shown in FIG. 2, the motor and the limiting portion 330 are connected via a slide rail 430, and the motor, the limiting portion 330 and the slide rail 430 share the same state of motion. A guide slot 440 that is slidably connected with the slide rail 430 is provided in the frame. The slide rail 430 slides within the guide slot 440. The guide slot 440 produces a limiting effect on the slide rail 430, restricting its movement in the first direction only and preventing rotation.

The printing device further includes the positioning assembly 200 for securing the container assembly 100.

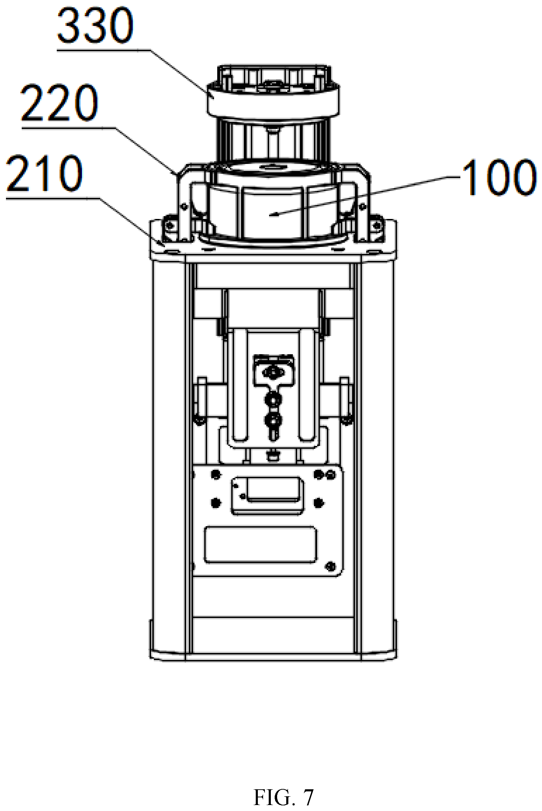

As shown in FIGs. 7 to 9, prior to printing, the container assembly 100 is to be mounted on the main body of the 3D printing device. Specifically, an outer cylinder 110 of the container assembly is secured to ensure its correct orientation and to prevent it from shifting during the printing process, which could affect the shape of the printed object within a build chamber 140.

The positioning assembly 200 includes a mounting platform 210 and a clamping assembly 220. The mounting platform 210 is configured to position and mount the container assembly 100, whilst the clamping assembly is configured to clamp and secure the container assembly 100 to the mounting platform 210. The mounting platform 210 is provided on the frame, and the clamping assembly is provided on the mounting platform 210. Alternatively, the clamping assembly may also be provided on the frame, or mounted directly or indirectly on the mounting platform 210.

The mounting platform 210 provides a standard mounting position for the container assembly 100. Once the bottom of the container assembly 100 is mounted on the mounting platform 210, the vent of the container assembly 100 is precisely aligned vertically with the gas outlet connector 310 on the limiting portion 330. The clamping assembly clamps the container assembly 100 to prevent it from wobbling.

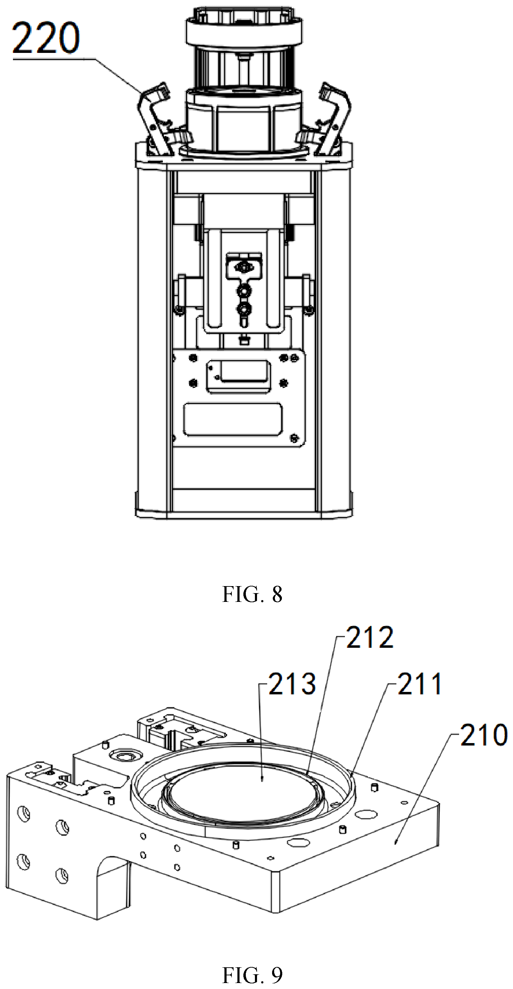

As shown in FIG. 9, a positioning recess 211 is provided on the mounting platform 210 to allow the bottom of the container assembly 100 to be positioned and mounted within the positioning recess 211.

The shape and dimensions of the positioning recess 211 correspond approximately to those of the outer cylinder 110, allowing the outer cylinder 110 to fit snugly within the positioning recess 211. An inner wall of the positioning recess 211 acts as a stop against the outer wall of the outer cylinder 110, thereby providing positioning.

The bottom of the positioning recess 211 is provided with an upwardly projecting support platform 212. The support platform 212 in plug-fit engagement with the bottom end of the container assembly 100, causing a light-transmitting film 111 to be tensioned and supported on the surface of the support platform 212. Specifically, the support platform 212 is plug-fitted with a lid 112. The support platform 212 is inserted through the opening of the lid 112 to bear against the light-transmitting film 111, causing it to be tautly supported on the surface of the support platform 212. The height of the support platform 212 is not less than a height from the mounting end at which the light-transmitting film 111 is mounted on the lid 112 to the bottom end of the lid. In some examples, the height of the support platform 212 is slightly greater than the height from the mounting end at which the light-transmitting film 111 is mounted on the lid 112 to the bottom end. In this embodiment, the height of the support platform 212 is slightly greater than the height of the lid 112. The support platform 212 is provided with a light aperture and a light-transmitting support member 213 covering light aperture. The light-transmitting support member 213 abuts against the light-transmitting film 111 of the light-transmitting assembly to ensure that the light-transmitting film 111 is tensioned.

In a process that the outer cylinder 110 is lowered into the positioning recess 211, the light-transmitting support member 213 comes into contact with the light-transmitting film 111 before the bottom of the outer cylinder 110 contact the bottom surface of the positioning recess 211. The light-transmitting film 111 is pressed upwards and tensioned, thereby allowing light to enter the build chamber 140 directly, reducing reflection and refraction. It should be noted that the mounting platform 210 is positioned opposite the limiting member 330, with the container assembly 100 installed between the mounting platform 210 and the limiting member 330.

In this embodiment, a cantilever receiving groove is formed between the positioning recess 211 and the support platform 212. After the outer cylinder 110 is removed from the mounting platform 210, the drive unit can move the cantilever along the first direction so that at least part of the cantilever (such as the gas outlet connector 310, sealing lips 321, first positioning structure 331, etc.) is received into the cantilever receiving groove, thereby reducing the overall dimensions of the whole device in the first direction, which is conducive to need for miniaturisation of the whole device.

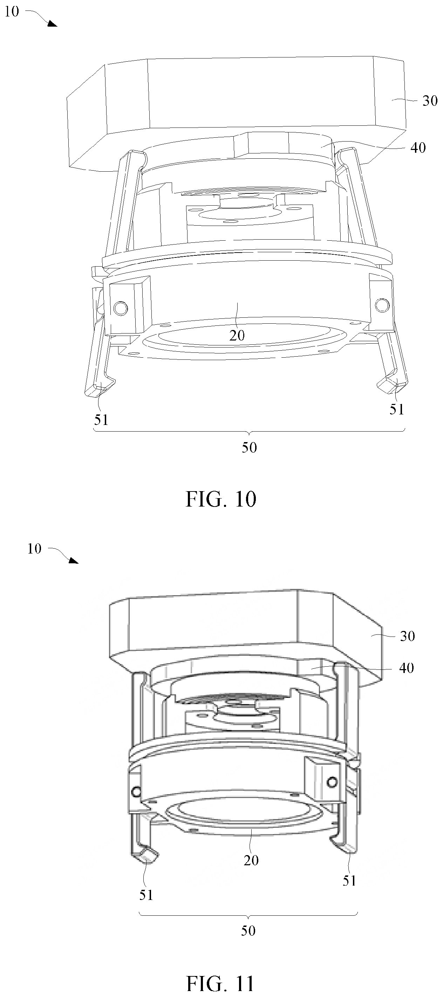

Referring to FIGs. 10 and 11, one or more embodiments of the present application further provide a locking device 10, mounted on the aforementioned limiting mechanism 400. In some embodiments, the locking device may be mounted on the cantilever 710. The locking device 10 may include a base 20, a drive assembly 30, a rotating portion 40, and a snap latching assembly 50. In one possible implementation, the drive assembly 30 may be mounted on the base 20, whilst the rotating portion 40 may be positioned between the drive assembly 30 and the base 20. The rotating portion 40 may be in driving connection with the drive assembly 30, and the rotating portion 40 may be rotatably mounted on the base 20. As shown in FIGs. 10-11, the snap latching assembly 50 is rotatably connected to the outer surface of the base 20, and one end of the snap latching assembly 50 is in contact with the outer contour 41 of the rotating portion 40.

It will be understood that the drive assembly 30 is capable of driving the rotating portion 40 to perform rotational movement. During the rotation of the rotating portion 40, it drives the snap latching assembly 50 to rotate; and during this rotation, the snap latching assembly 50 opens or closes. In this way, the snap latching assembly 50 opens and closes with the rotational movement of the outer contour 41 of the rotating portion 40, thereby achieving a locking or unlocking action.

Thus, in the locking device 10 provided by the embodiments of the present application, the rotating portion 40 is driven to rotate via the drive assembly 30, thereby causing the snap latching assembly 50 to open or close, to achieve the locking or unlocking state of the platform assembly 730. Furthermore, the platform assembly 730 does not require the provision of magnetic member, thereby reducing costs.

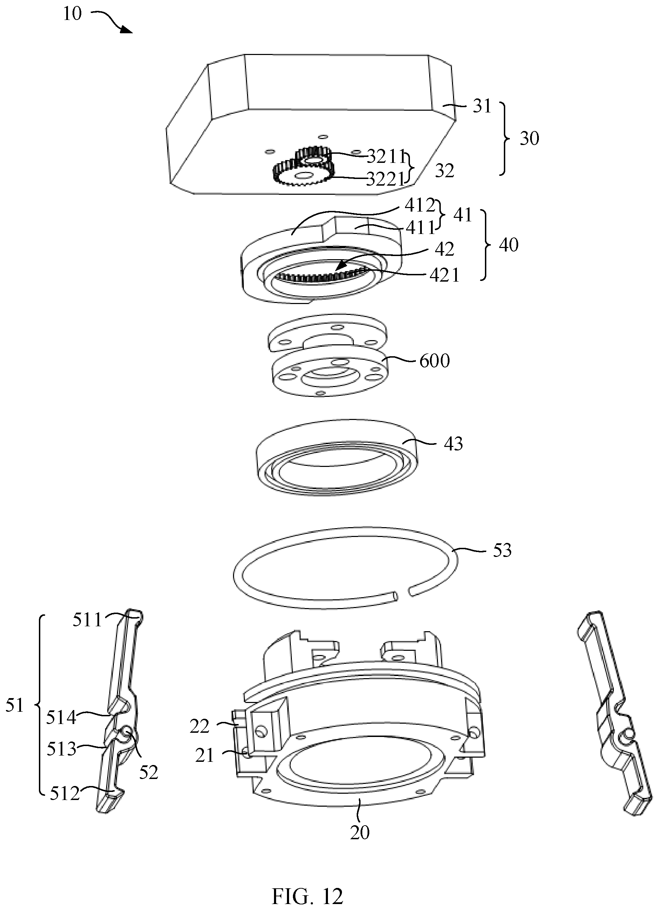

Referring to FIG. 12, based on the aforementioned embodiments, the outer contour 41 of the rotating portion 40 may include a first contour section 411 and a second contour section 412. In one possible implementation, the number of first contour sections 411 and second contour sections 412 may each be two; however, the embodiments of the present application are not limited thereto. In the embodiments of the present application, the two first contour sections 411 may be arranged oppositely, and correspondingly, the two second contour sections 412 may be arranged oppositely. The first contour sections 411 and the second contour sections 412 are connected to form the outer contour 41 of the rotating portion 40.

Referring again to FIG. 12, based on the aforementioned embodiments, the first contour sections 411 or the second contour sections 412 are arranged to project radially from the rotating portion 40. In one possible implementation, the first contour sections 411 may be arranged to project radially from the rotating portion 40. Alternatively, in another possible implementation, the second contour sections 412 may be arranged to protrude radially from the rotating portion 40. The embodiments of the present application are not limited thereto.

In the embodiments of the present application, provided as an example is that the first contour sections 411 being projecting radially from the rotating portion 40. It will be understood that when the rotating portion 40 rotates to a position where the first contour sections 411 come into contact with the snap latching assembly 50, the snap latching assembly 50 is in a closed state, thereby securing the platform assembly 730. Correspondingly, when the rotating portion 40 rotates to a position where the second contour sections 412 come into contact with the snap latching assembly 50, the snap latching assembly 50 is in an open state, thereby unlocking the platform assembly 730. In this way, the shapes of the first contour sections 411 and the second contour sections 412 can be adapted to the opening and closing movement trajectory of the snap latching assembly 50, so that the rotational movement of the rotating portion 40 causes the snap latching assembly 50 to open and close.

In one possible implementation, by way of example, the rotating portion 40 may be a cam structure; the embodiments of the present application are not limited thereto.

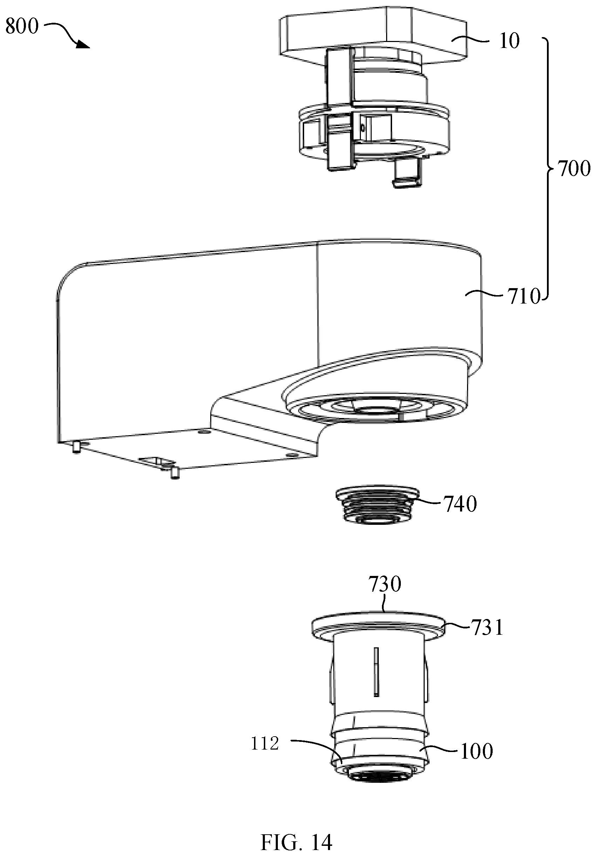

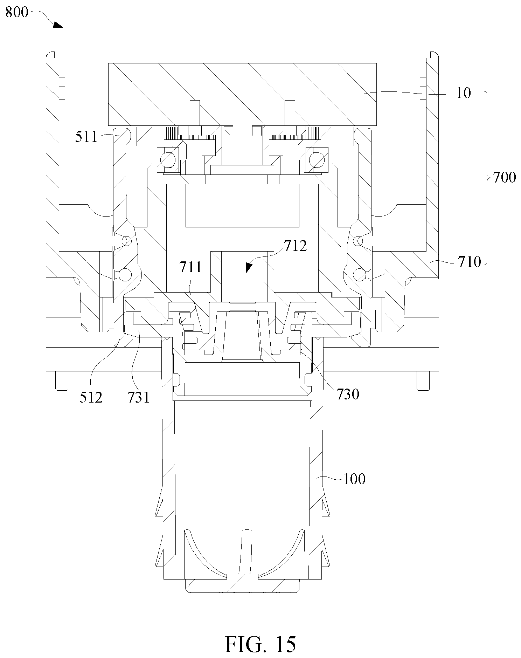

Referring to FIGs. 14 and 15, based on the aforementioned embodiments, the locking device 10 is mounted on the cantilever 710. The locking device 10 is adapted to engage with the positioning portion 711 of the cantilever 710. The positioning portion 711 may be axially mated with the platform assembly 730, whilst the snap latching assembly 50, when closed, can engage with the platform assembly 730, thereby securing the platform assembly 730.

In one possible implementation, a clearance area may be provided on the base 20, the gas injecting mechanism may be provided within the cantilever, and a vent hole 712 may be formed in the positioning portion. It will be understood that, when the locking device 10 is mounted on the positioning portion 711, the clearance region serves to allow the vent hole 712 in the positioning portion 711 to communicate with the gas injecting mechanism in the cantilever 710.

Referring further to FIGs. 10 and 11, based upon the aforementioned embodiments, by way of example, the snap latching assembly 50 may include a male latch or a female latch. The latching assembly 50 may further include latching hooks 51. In one possible implementation, the number of latching hooks 51 may be at least two; however, the present application places no restriction on the number of latching hooks 51. With two latching hooks 51 as an example, as shown in FIGs. 10 and 11, the two latching hooks 51 are evenly distributed along the circumference of the outer surface of the base 20, and each latching hook 51 may have a force-receiving end 511 and a locking end 512. The force-receiving end 511 is designed to contact the outer contour 41 of the rotating portion, whilst the locking end 512 is designed to engage with the platform assembly 730.

In the embodiments of the present application, it is understood that when the force-receiving end 511 is in contact with the first contour sections 411, the locking end 512 is closed inwards and is in a locked state. Conversely, when the force-receiving end 511 is in contact with the second contour sections 412, the locking end 512 is opened outwards and is in an unlocked state.

Referring further to FIG. 12, based on the aforementioned embodiments, through-holes 21 may be formed in the base 20, whilst a first mounting slot 513 may be formed in the latch hook 51. The through-holes 21 may be positioned corresponding to or in alignment with the first mounting slot 513. In one possible implementation, a pivot shaft 52 may be provided, passing through the first mounting slot 513 and the through-holes 21, with the latch hook 51 being mounted on the pivot shaft 52 to rotate, thereby enabling the latch hook 51 to be rotationally connected to the base 20 via the pivot shaft 52.

Referring further to FIG. 12, based on the aforementioned embodiments, the locking device 10 may further include an elastic member 53. The elastic member 53 may be positioned between the base 20 and the latch hooks 51. It is understood that the elastic member 53 serves to provide an elastic force that causes the force-receiving ends 511 to move inward, thereby enabling the locking ends 512 to tend towards the open state.

Referring further to FIG. 12, based on the above embodiments, in one possible implementation, a second mounting slot 514 may be formed on the latch hook 51, whilst a third mounting slot 22 may be formed on the base 20. It is understood that the second mounting slot 514 and the third mounting slot 22 are arranged corresponding to each other or in alignment. In the embodiments of the present application, the elastic member 53 may be positioned within the third mounting slot 22 of the base 20 and engage with the second mounting slot 514 on the latch hook 51.

In one possible implementation, the elastic member 53 may be an elastic band, a spring or a rubber member; the embodiments of the present application are not limited to this.

When the elastic member 53 is a spring, the spring may be positioned within the third mounting slot 22 of the base 20. Both ends of the spring connecting the bottom wall of the third mounting slot 22 and the corresponding wall surface of the second mounting slot 514 of the latch hook 51, thereby providing the latch hook 51 with an elastic preload force in a direction perpendicular to the base 20.

When the elastic member 53 is an elastic band, at least a portion of the elastic band may be positioned within the second mounting slot 514 of the latch hook 51, clamping against the wall surface of the second mounting slot 514 by virtue of its own radial elastic tension, thereby providing a radial clamping force to the latch hook 51.

Referring again to FIG. 12, based on the aforementioned embodiments, the drive assembly 30 may include a second drive unit 31 and a transmission assembly 32. One end of the transmission assembly 32 may be connected to the second drive unit 31, whilst other end of the transmission assembly 32 may be connected to the rotating portion 40, thereby enabling the second drive unit 31 to be connected to the rotating portion 40 via the transmission assembly 32. In one possible implementation, the second drive unit 31 may be a motor; the embodiments of the present application are not limited thereto.

Referring again to FIG. 12, based upon the aforementioned embodiments, in one possible implementation, the transmission assembly 32 may further include a first transmission member 3211 and a second transmission member 3221, where the first transmission member 3211 and the second transmission member 3221 are rotatably connected to the second drive unit 31. In the embodiments of the present application, it is understood that the second drive unit 31 is capable of driving the first transmission member 3211 to rotate, thereby causing the second transmission member 3221 to rotate via the first transmission member 3211.

Referring again to FIG. 12, based on the aforementioned embodiments, the rotating portion 40 may further include a through-hole 42. A third transmission member 421 may be provided on the wall of the through-hole 42. In one possible implementation, the third transmission member 421 may be arranged circumferentially along the wall of the through-hole 42. In the embodiments of the present application, the third transmission member 421 may be in driving connection with the second transmission member 3221. It will be understood that the second drive unit 31 drives the first transmission member 3211 to rotate, first transmission member 3211 causes the second transmission member 3221 to rotate, which in turn drives the entire rotating portion 40 to rotate via the third transmission member 421.

In one possible implementation, the first transmission member 3211, the second transmission member 3221 and the third transmission member 421 may all be gear structures; the embodiments of the present application are not limited thereto. In the embodiments of the present application, the first transmission member 3211 may be meshed with the second transmission member 3221, whilst the second transmission member 3221 may also be meshed with the third transmission member 421.

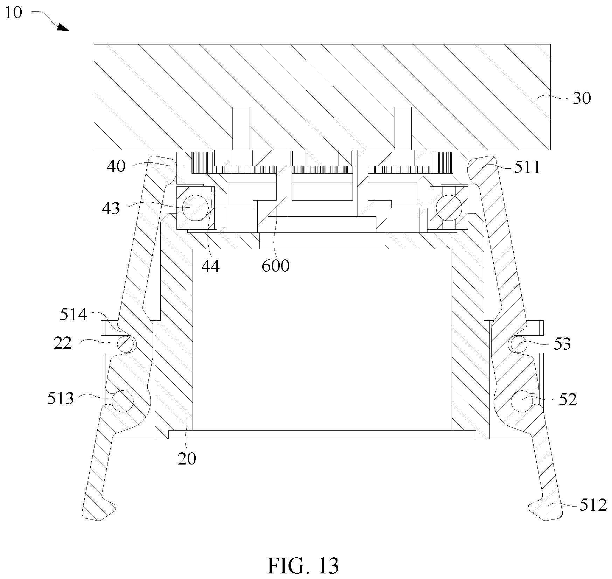

Referring again to FIG. 12, based upon the aforementioned embodiments, in one possible implementation, the third transmission member 421 may be rotatably connected to the base 20 via a bearing 43. In the embodiments of the present application, as shown in FIG. 13, a stepped portion 44 may be provided on the rotating portion 40. It will be understood that the inner side of bearing 43 may abut against the stepped portion 44, whilst the outer side of bearing 43 may abut against the base 20, thereby allowing the bearing 43 to be positioned between the rotating portion 40 and the base 20, facilitating rotation of the rotating portion 40.

Referring again to FIG. 12, based on the aforementioned embodiments, the locking device 10 may further include an adapter 600. In one possible implementation, a number of the adapter 600 may be one or more. The embodiments of the present application are not limited in this respect. In the embodiments of the present application, one end of the adapter 600 may be inserted through the through-hole 42 of the rotating portion 40 and fixedly connected to the second drive unit 31. Additionally, other end of the adapter 600 may be fixedly connected to the base 20.

Referring to FIGs. 14 and 15, a second aspect of the present invention provides a printing device 700. The printing device 700 may include a cantilever 710 and the aforementioned locking device 10. It is understood that the locking device 10 is capable of locking or unlocking the platform assembly 730.

Referring further to FIG. 15, based upon the aforementioned embodiments, the locking device 10 may be fixedly mounted on the cantilever 710. The cantilever 710 is provided with the gas injecting mechanism therein, and an end of the cantilever 710 is provided with a positioning portion 711, on which a vent hole 712 communicating with the gas injecting mechanism is provided.

In the embodiments of the present application, it is understood that the locking device 10 serves to lock the platform assembly 730 securely to the cantilever 710 and ensure reliable dock between the gas injecting mechanism on the cantilever 710 and the vent hole 712 on the positioning portion 711.

In the embodiments of the present application, it is understood that the cantilever 710 moves up and down. By securing the platform assembly 730 via the locking device 10, the cantilever 710 drives the platform assembly 730 to move up and down synchronously.

The locking device 10 is positioned within the cantilever 710, the base 20 is mounted on the positioning portion 711, and the latch hook 51 extends beyond the positioning portion 711, cooperating with the positioning portion 711 to form a latch slot for positioning the platform assembly 730. The end of the platform assembly 730 has a protrusion 731. In one possible implementation, the end of the platform assembly 730 facing the locking device 10 has the protrusion 731, which extends outwards along the transverse direction of the platform assembly 730 and is positioned within the latch slot. Alternatively, the latch slot may also be provided on the platform assembly 730, with the latching hook 51 positioned within the latch slot.

In the printing device 700, an integrated gas injecting mechanism is provided to supply gas to the platform assembly 730. The gas injecting mechanism is housed within the cantilever 710. The gas outlet of the gas injecting mechanism is directed to the positioning portion 711 at the end of the cantilever 710.

The vent hole 712 is formed in the positioning portion 711. This vent hole 712 serves as a gas outlet and is connected to the gas injecting mechanism, thereby forming a complete, sealed gas delivery path from the gas source to the gas outlet connector. In one implementation, the positioning portion 711 is provided with a gas vent connector, and the vent hole 712 is formed in the gas connector. The gas connector mates with the vent.

When the locking device 10 securely locks the platform assembly 730 onto the cantilever 710, it simultaneously ensures that the gas inlet connector on the platform assembly 730 is precisely aligned with and reliably sealed against the vent hole 712 on the positioning portion 711 of the cantilever 710. This allows gas from the gas injecting mechanism to be delivered through the vent hole 712 to the platform assembly 730, and subsequently to the printing chamber formed by the platform assembly 730 in conjunction with the container assembly 100, so as to complete a specific printing process.

Referring further to FIGs. 14 and 15, a third aspect of the present application provides a printing system 800. The printing system 800 may include the aforementioned printing device 700, container assembly 100, and platform assembly 730. The platform assembly 730 is connected to the container assembly 100, and the locking device 10 of the printing device 700 is configured to lock or unlock the platform assembly 730. In one possible implementation, one end of the platform assembly 730 is connected to the container assembly 100, whilst other end of the platform assembly 730 engages with the positioning portion 711 of the cantilever 710.

Referring further to FIG. 15, based upon the aforementioned embodiments, the end of the platform assembly 730 has a protrusion 731. In one possible implementation, the end of the platform assembly 730 facing the locking device 10 includes the protrusion 731, which is arranged to project outward along the transverse direction of the platform assembly 730; specifically, the protrusion 731 is arranged to project in the radial direction of the platform assembly 730. By way of example, the protrusion 731 may be a flange rim. The embodiments of the present application are not limited thereto.

Thus, in the embodiments of the present application, when the locking device 10 is in the locked state, the locking end 512 of the snap latching assembly 50 of the locking device 10 engages with the protrusion 731 of the platform component 730, thereby locking onto the platform component 730. Accordingly, when the locking device 10 is in the unlocked state, the locking end 512 of the snap latching assembly 50 of the locking device 10 can disengage from the protrusion 731 of the platform assembly 730, thereby unlocking from the platform assembly 730.

Referring again to FIG. 14, based on the aforementioned embodiments, the printing device 700 may further include a buffer member 740. The buffer member 740 may be fitted over the cantilever 710. It will be understood that the buffer member 740 serves to provide an air seal and to offer elasticity when the snap latching assembly 50 is engaged. In one possible implementation, the buffer member 740 may be a rubber member. The embodiments of the present application are not limited thereto.

The platform assembly 730 comes into contact with the cantilever 710, and the second drive unit 31 in the locking device 10 begins to rotate, sequentially driving the first transmission member 3211, the second transmission member 3221, the third transmission member 421 and the rotating portion to rotate. The first contour sections 411 of the rotating portion 40 gradually abuts the force-receiving end 511 of the latch hook 51, causing the locking end 512 of the latch hook 51 to retract inwards and thereby engage with the protrusion 731 of the platform assembly 730, thereby locking the platform assembly 730.

The second drive unit 31 in the locking device 10 continues to rotate, sequentially driving the first transmission member 3211, the second transmission member 3221, the third transmission member 421 and the rotating portion to perform rotational movement. The second contour section 412 of the rotating portion 40 gradually abuts the force-receiving end 511 of the latching member 51. Under the action of the elastic member 53, the force-receiving end 511 closes inwards, thereby causing the locking end 512 to open, thus unlocking the platform assembly 730.

In the embodiments of the present application, the platform assembly 730 may be connected to the container assembly 100. The printing process of the printing device 700 is as follows: the platform assembly 730 moves upwards from the bottom of the container assembly 100, and the platform assembly 730 performs a reciprocating motion throughout the entire printing process. A thin layer of liquid resin is formed between the platform assembly 730 and the container assembly 100. Light from the light source is then directed through the container assembly 100 to irradiate the liquid resin in accordance with the slice pattern. The resin in the irradiated area cures and adheres firmly to the platform assembly 730 or to the previously cured layer, thereby achieving exposure and curing. Subsequently, the platform assembly 730 is raised, separating the new cured layer from the bottom of the container assembly 100. After the platform assembly 730 is raised, the liquid resin flows again, thereby continuing to spread into a uniform thin layer. Finally, the above steps are repeated until the entire object is printed.

In a possible implementation, the container assembly 100 is a container assembly 100 containing resin; alternatively, it may also be a container assembly 100 not containing resin. The embodiments of the present application are not limited thereto.

In the embodiments of the present application, the locking device 10 drives the snap latching assembly 50 to rotate by means of the drive assembly 30, thereby causing the snap latch assembly 50 to open and close to achieve the locking or unlocking state of the platform assembly 730. Furthermore, the platform assembly 730 does not need provision of magnetic member, thereby reducing costs.

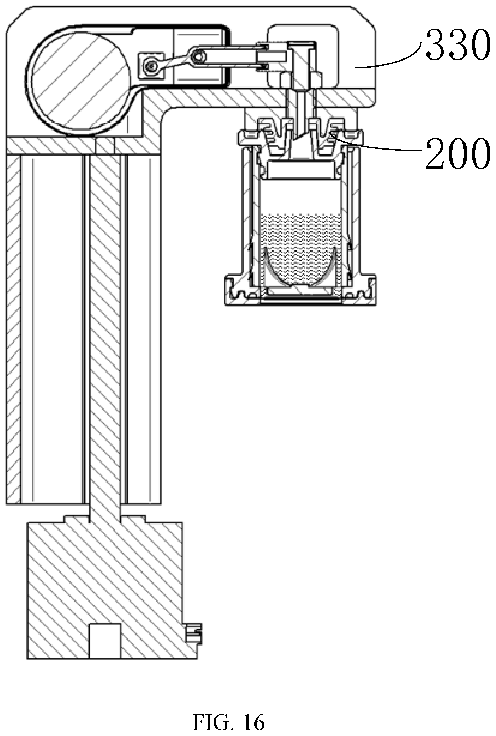

As shown in FIG. 16, the vent is provided with a sealing element such as aluminium foil and/or heat-shrink film. The cantilever moves towards the platform assembly, causing a piercing element on the cantilever to pierce the sealing element, thereby connecting the gas outlet connector to the vent via a plug-in fit. In this implementation, the cantilever is fixedly connected to or abuts against the platform assembly, and the cantilever moves in synchronisation with the platform assembly. The gas outlet connector may also be connected to the vent independently, without relying on the engagement of the cantilever and the platform assembly. In this implementation, controlling the cantilever to move towards the platform assembly includes: controlling the cantilever to move towards the platform assembly so that the piercing element on the cantilever pierces the sealing member on the container assembly. Controlling the cantilever to move towards the platform assembly so that the gas outlet connector on the cantilever connects with the vent on the container assembly via a plug-in fit includes controlling the cantilever to move towards the platform assembly so that the cantilever abuts against the platform assembly; and further includes controlling the cantilever to move towards the platform assembly so that the cantilever abuts against the platform assembly and the platform assembly abuts against the light-transmitting assembly (the light-transmitting assembly being supported and tensioned by the printing device); controlling the snap clamping assembly on the cantilever to clamp the platform assembly to form a fixed connection whilst the cantilever abuts against the platform assembly; and performing a zero-point detection whilst the platform assembly abuts against the light-transmitting assembly.

Finally, it should be noted that the above embodiments are intended merely to illustrate the technical solutions of the present application and are not intended to limit them; although the present application has been described in detail with reference to the aforementioned embodiments, those skilled in the art will understand that modifications may still be made to the technical solutions described in the aforementioned embodiments, or that some or all of the technical features may be replaced by equivalents; and such modifications or replacements do not cause the essence of the corresponding technical solutions to deviate from the scope of the technical solutions of the embodiments of the present application.

## Claims

1. A limiting mechanism (400), comprising:
a limiting portion (330) and a drive unit,
wherein the limiting portion (330) comprises a cantilever, and the drive unit is connected with the limiting portion (330) and is capable of driving the limiting portion (330) to move.

2. The limiting mechanism according to claim 1, wherein a gas injecting mechanism (300) is provided within the cantilever,
wherein the cantilever is capable of abutting against a container assembly (100) under driving of the drive unit, and the gas injecting mechanism (300) is in communication with a vent of the container assembly (100).

3. The limiting mechanism according to claim 2, wherein the gas injecting mechanism (300) comprises a gas outlet connector (310), and an outlet of the gas outlet connector (310) forms a gas outlet; and
wherein the gas outlet connector (310) is fitted with an elastic sealing sleeve (320) on its outer surface, and when the cantilever abuts against the container assembly (100), the elastic sealing sleeve (320) is sealingly inserted into the vent.

4. The limiting mechanism according to claim 3, wherein the elastic sealing sleeve (320) comprises a sleeve body, a circumferential outer wall of the sleeve body is provided with a sealing lip (321) projecting outwards; and
wherein when the cantilever abuts against the container assembly (100), the sealing lip (321) abuts against the vent;
preferably, the sealing lip (321) comprises at least two sealing lips (321) along a first direction;
preferably, along the first direction, of two adjacent sealing lips (321) in the at least two sealing lips (321), an outer diameter of the sealing lip (321) closer to an interior of the container assembly (100) is smaller than an outer diameter of the sealing lip (321) further from the interior of the container assembly (100).

5. The limiting mechanism according to claim 3, wherein a first positioning structure (331) is provided on a surface of the limiting portion (330) on which the gas outlet is provided; and
a second positioning structure (1255) is correspondingly provided on the container assembly (100); and
wherein when the cantilever abuts against the container assembly (100), the first positioning structure (331) engages with the second positioning structure (1255) to position the limiting portion (330) relative to the container assembly (100) in the first direction and in a first plane, and wherein the first plane is perpendicular to the first direction.

6. The limiting mechanism according to claim 5, wherein the first positioning structure (331) comprises a protrusion provided on a bottom surface of the limiting portion (330), and the second positioning structure (1255) comprises a recess provided on the container assembly (100); and
wherein when the cantilever abuts against the container assembly (100), the protrusion is inserted into the recess.

7. The limiting mechanism according to claim 2, further comprising a locking device (10), wherein the locking device (10) is mounted on the cantilever, and the locking device (10) is configured to lock and secure the container assembly (100) to the cantilever.

8. The limiting mechanism according to claim 7, wherein the locking device (10) comprises:
a base (20);
a drive assembly (30), the drive assembly (30) being mounted on the base (20); and
a snap latching assembly (50), the snap latching assembly (50) being rotatably connected to an outer surface of the base (20); and
wherein the snap latching assembly (50) is driven to rotate by the drive assembly (30), so that the snap latching assembly (50) opens or closes during rotation, thereby locking or unlocking the container assembly (100).

9. The limiting mechanism according to claim 8, wherein the locking device (10) further comprises a rotating portion (40),
wherein the rotating portion (40) is rotatably mounted on the base (20), the rotating portion (40) is drivingly connected with the drive assembly (30), and an outer contour (41) of the rotating portion (40) is in contact with an end of the snap latching assembly (50);
wherein the outer contour (41) of the rotating portion (40) comprises two oppositely arranged first contour sections (411) and two oppositely arranged second contour sections (412), the first contour sections (411) and the second contour sections (412) are connected, and the first contour sections (411) or the second contour sections (412) are arranged to protrude in a radial direction of the rotating portion (40); and
wherein shapes of the first contour sections (411) and the second contour sections (412) match opening and closing movement trajectory of the snap latching assembly (50), and a rotational movement of the rotating portion (40) causes the snap latching assembly (50) to open or close.

10. The limiting mechanism according to claim 9, wherein the locking device (10) is configured to engage with a positioning portion (711) of the cantilever (710), the positioning portion (711) being axially engaged with the container assembly (100), and the snap latching assembly (50), when closed, is engaged with the container assembly (100), thereby securing the container assembly (100);
preferably, the base (20) is provided with a clearance region; and wherein when the locking device (10) is mounted on the positioning portion (711), the clearance region is configured to allow a vent hole (712) on the positioning portion (711) to communicate with the gas injecting mechanism (300) on the cantilever (710).

11. The limiting mechanism according to claim 9, wherein the snap latching assembly (50) comprises at least two latch hooks (51), wherein the at least two latch hooks (51) are uniformly distributed along a circumference of the outer surface of the base (20), and each of the latch hooks (51) has a force-receiving end (511) and a locking end (512);
wherein when the force-receiving end (511) is in contact with one of the first contour sections (411), the locking end (512) is in a locked state; and
wherein when the force-receiving end (511) is in contact with one of the second contour sections (412), the locking end (512) is in an unlocked state.

12. The limiting mechanism according to claim 11, wherein an end of the container assembly (100) comprises a radially extending projection (731); and
wherein when the locking device (10) is in the locked state, locking ends (512) of the snap latching assembly (50) engage with the projection (731) of the container assembly (100) to lock the container assembly (100);
preferably, the limiting mechanism further comprises: an elastic member (53), wherein the elastic member (53) is configured to provide an elastic force in an inward direction on the force-receiving ends (511).

13. The limiting mechanism according to claim 9, wherein the drive assembly (30) comprises a second drive unit (31) and a transmission assembly (32);
wherein one end of the transmission assembly (32) is connected to the second drive unit (31), and other end of the transmission assembly (32) is connected to the rotating portion (40); and
wherein the transmission assembly (32) comprises a first transmission member (3211) and a second transmission member (3221), the first transmission member (3211) and the second transmission member (3221) are rotatably connected to the second drive unit (31), and wherein the second drive unit (31) drives the first transmission member (3211) to rotate, thereby bringing the second transmission member (3221) to rotate;
preferably, wherein the rotating portion (40) further comprises a through-hole (42), and a wall of the through-hole (42) is provided with a circumferential third transmission member (421); and the third transmission member (421) is in driving connection with the second transmission member (3221).

14. The limiting mechanism according to claim 8, wherein an end of the cantilever (710) is provided with a positioning portion (711), and the positioning portion (711) is provided with a vent hole (712) communicating with the gas injecting mechanism (300); and
wherein when the locking device (10) locks and secures the container assembly (100) to the cantilever (710), the vent hole (712) in the positioning portion (711) docks with the vent of the container assembly (100).

15. A printing system, comprising a system main body, a container assembly (100) and the limiting mechanism (400) according to any one of claims 1 to 14.
